# EUROPÄISCHE PATENTSCHRIFT

(11) **EP 1 153 087 B1**
(45) Veröffentlichungstag und Bekanntmachung des Hinweises auf die Patenterteilung: **04.04.2007**
(21) Anmeldenummer: 00903569.2
(22) Anmeldetag: 07.01.2000
(51) Int. Cl.: C09C 1/00, C08K 9/02

(54) **MEHRSCHICHTIGES PERLGLANZPIGMENT**
MULTILAYER NACREOUS PIGMENT
PIGMENT DE LUSTRE NACRE A COUCHES MULTIPLES

(30) Priorität: 19.01.1999 DE 19901612
(43) Veröffentlichungstag der Anmeldung: 14.11.2001
(73) Patentinhaber: Merck Patent GmbH, 64293 Darmstadt (DE)
(72) Erfinder: ANDES, Stephanie, D-63452 Hanau (DE); FUCHS-POHL, Gerald, D-64331 Weiterstadt (DE); PFAFF, Gerhard, D-64839 Münster (DE)
(86) Internationale Anmeldenummer: PCT/EP2000/000069
(87) Internationale Veröffentlichungsnummer: WO 2000/043456

(56) Entgegenhaltungen:
- EP-A- 0 753 545
- WO-A-93/08237
- DE-A- 19 802 234

## Beschreibung

Die Erfindung betrifft ein mehrschichtiges Perlglanzpigment mit einem ausgeprägten Farbflop basierend auf einem plättchenförmigen Substrat aus einem Material mit einer Brechzahl von größer als 1,8.

Mehrschichtige Pigmente, die einen winkelabhängigen Farbwechsel zwischen mehreren intensiven Interferenzfarben zeigen, sind bekannt.

So beschreibt US 4 434 010 ein mehrschichtiges Interferenzpigment, bestehend aus einer zentralen Schicht eines reflektierenden Materials (Aluminium) und alternierenden Schichten zweier transparenter, dielektrischer Materialien mit hoher und niedriger Brechzahl, beispielsweise Titandioxid und Siliziumdioxid beiderseits der zentralen Aluminiumschicht. In einer weiteren Ausführungsform des Pigmentes werden die auf die zentrale Aluminiumschicht folgenden Schichten durch Magnesiumfluorid und Chrom gebildet. Dieses Pigment zeigt einen intensiven Farbflop von grün nach purpurrot.

EP 0 753 545 beschreibt goniochromatische Glanzpigmente auf der Basis transparenter, nichtmetallischer, plättchenförmiger Substrate, die mindestens ein Schichtpaket aus einer farblosen Beschichtung mit einem Brechungsindex n ≤ 1,8 und einer reflektierenden, selektiv oder nichtselektiv absorbierenden, für sichtbares Licht zumindest teilweise durchlässigen Beschichtung sowie gewünschtenfalls zusätzlich eine äußere Schutzschicht aufweisen.

Diese Pigmente haben den Nachteil, daß sie durch einen technisch sehr aufwendigen und kostenintensiven Prozeß, beispielsweise durch Chemical Vapor Deposition (CVD)- oder Physical Vapor Deposition (PVD)-Verfahren hergestellt werden. Weiterhin nachteilig ist die oft schwere Reproduzierbarkeit der Pigmente in der gewünschten Produktqualität und ihre mangelnde Witterungsstabilität.

Aus der DE 198 02 234 sind goniochromatische Pigmente bekannt, welche ein plättchenförmiges Substrat aufweisen, das aus einem hochbrechenden Metalloxid bestehen kann. Auf dem Substrat befindet sich mindestens ein Schichtpaket aus A, einer carboxylathaltigen Zirkoniumoxidschicht und B, einer reflektierenden Schicht, die für sichtbares Licht zumindest teilweise durchlässig ist und aus Metallen bestehen kann.

WO 93/08237 beschreibt ein Verfahren zur Herstellung eines plättchenförmigen Pigments, welches aus einer transparenten, anorganischen, plättchenförmigen Matrix besteht und mit einer oder mehreren dünnen, transparenten oder semitransparenten reflektierenden Schichten aus Metalloxiden oder Metallen belegt ist, wobei ein Precursor des Matrixmaterials als dünner Film auf ein endloses Band aufgebracht, getrocknet, verfestigt, mit Säure behandelt, vom Trägermedium getrennt und mit einer oder mehreren Schichten aus Metalloxiden oder Metallen belegt wird.

Aufgabe der vorliegenden Erfindung ist es, ein im wesentlichen transparentes Interferenzpigment mit kräftigen Interferenzfarben und/oder einer starken Winkelabhängigkeit der Interferenzfarben zur Verfügung zu stellen, das sich durch vorteilhafte Anwendungseigenschaften auszeichnet und gleichzeitig auf einfache Art und Weise hergestellt werden kann.

Diese Aufgabe wird gemäß der Erfindung gelöst durch ein mehrschichtiges Periglanzpigment auf Basis eines plättchenförmigen Substrates aus einem Material mit einer Brechzahl von größer als 1,8 das mindestens
(i) eine erste Schicht aus einem Material mit niedriger Brechzahl im Bereich von 1,35 bis 1,8,
(ii) eine zweite Schicht aus einem Material mit einer Brechzahl von größer als 1,8, sowie
(iii) eine semitransparente Metallschicht, die auf dem Substrat oder der Schicht (ii) aufgebracht ist, aufweist.

Gegebenenfalls kann das Pigment eine Nachbeschichtung aufweisen.

Wenn die semitransparente Metallschicht die äußere Schicht des Pigmentes bildet, können auch noch hoch- und niedrigbrechende Schichten sich anschließen. Bevor die Metallschicht aufgebracht wird, können sich die erste und zweite Schicht auch wiederholen.

Weiterhin wird diese Aufgabe gemäß der Erfindung gelöst durch ein Verfahren zur Herstellung des erfindungsgemäßen Pigmentes durch
- Aufbringen eines Precursors des Substratmaterials als dünner Film auf ein endloses Band,
- Verfestigung des flüssigen Filmes durch Trocknung und dabei Entwicklung des Metalloxides durch chemische Reaktion aus dem Precursor,
- Ablösung des getrockneten Filmes,
- Waschen der erhaltenen Substratpartikel und Resuspendierung in einer Beschichtungslösung,
- Beschichtung der Substratpartikel mit mindestens einer ersten Schicht aus einem Material mit niedriger Brechzahl im Bereich von 1,35 bis 1,8, einer zweiten Schicht aus einem Material mit einer Brechzahl von größer als 1,8 sowie mindestens einer semitransparenten Metallschicht. Außerdem kann das Pigment zusätzlich mit einer Nachbeschichtung versehen werden.

Das Schichtsystem kann aber auch mit Hilfe eines PVD-Verfahrens erzeugt werden bzw. durch eine Kombination von naßchemischen Verfahren und/oder CVD- und/oder PVD-Verfahren erzeugt werden.

Gegenstand der Erfindung ist weiterhin die Verwendung der erfindungsgemäßen Pigmente in Farben, Lacken, Druckfarben, Kunststoffen, keramischen Materialien, Gläsern und kosmetischen Formulierungen. Hierfür können sie auch als Mischungen mit handelsüblichen Pigmenten, beispielsweise anorganischen und organischen Absorptionspigmenten, Metalleffektpigmenten und LCP-Pigmenten, eingesetzt werden.

Die erfindungsgemäßen Pigmente können neben den rein koloristischen Anwendungen auch für funktionelle Anwendungen in Betracht gezogen werden. Beispiele hierfür sind Pigmente für den Sicherheitsbereich, z.B. Wert- und Sicherheitsdruck, Pigmente mit spezieller IR-Reflexion, z.B. für Gewächshausfolien und Pigmente für die Lasermarkierung von Kunststoffen.

Die erfindungsgemäßen Pigmente basieren auf plättchenförmigen Substraten mit einer Brechzahl von größer als 1,8. Diese Substrate können beispielsweise aus Titandioxid, Zirkoniumdioxid, α-Eisen(III)-oxid, Zinnoxid, Zinkoxid oder anderen transparenten, stabilen und zur Aufnahme von löslichen oder unlöslichen Farbmitteln befähigten Materialien bestehen.

Als Precursor für die Herstellung der Substrate werden Lösungen von anorganischen oder organischen Verbindungen der Metalle Titan, Zirkonium, Eisen, Zinn, Zink oder Gemischen derselben eingesetzt. Ein bevorzugter Precursor ist Titantetrachlorid.

Die plättchenförmigen Substratpartikel haben eine Dicke zwischen 0,05 und 5 µm und insbesondere zwischen 0,05 und 2 µm. Die Ausdehnung in den beiden anderen Dimensionen beträgt zwischen 2 und 200 µm und insbesondere zwischen 5 und 50 µm.

Als Schichtmaterial für die Schicht (i) mit einer Brechzahl von 1,35 bis 1,8 eignen sich alle dem Fachmann bekannten niedrigbrechenden Materialien, die filmartig und dauerhaft auf die Substratteilchen aufgebracht werden können. Besonders geeignet sind Metalloxide oder Metalloxidgemische, wie z.B. SiO₂, Al₂O₃, AlO(OH), B₂O₃ oder ein Gemisch der genannten Metalloxide oder MgF₂. Als Material mit niedriger Brechzahl können jedoch auch Polymere eingesetzt werden, wie z.B. Acrylate. Die verwendeten Monomere haben ein Molekulargewicht von 200 bis 1000 und stehen als Mono-, Di- oder Triacrylate zur Verfügung. Hinsichtlich funktioneller Gruppen sind sie als Kohlenwasserstoffe, Polyole, Polyether, Silicone oder als fluorierte teflonartige Monomere verfügbar. Diese Monomere können durch Elektronenstrahlen oder UV-Strahlen polymerisiert werden. Die erhaltenen Schichten besitzen eine Temperaturstabilität bis zu 250 °C. Die Brechzahlen der Acrylatschichten liegen im Bereich von 1,35 bis 1,60. Weitere Angaben sind bei David G. Shaw und Marc G. Langlois zu finden: Use of a new high speed acrylate deposition process to make novel multilayer structures, MRS-Tagung in San Francisco 1995; A new high speed process for vapor depositing fluoro and silicone acrylates for release coating applications, Tagung der Society of Vacuum Coater in Chicago, Illinois, 1995.

Die Dicke der Schicht (i) beträgt 10 - 1000 nm, vorzugsweise 20 - 800 nm und insbesondere 30 - 600 nm.

Geeignete Schichtmaterialien für die Schicht (ii) mit einer Brechzahl von größer als 1,8 sind vorzugsweise Metalloxide bzw. Metalloxidgemische, wie z.B. TiO₂, Fe₂O₃, ZrO₂, ZnO, SnO₂ oder Verbindungen mit hoher Brechzahl wie z.B. Eisentitanate, Eisenoxidhydrate, Titansuboxide, Chromoxid, Bismutvanadat, Cobaltaluminat sowie Mischungen bzw. Mischphasen der genannten Verbindungen untereinander oder mit anderen Metalloxiden. Es kommen auch Metallsulfide, Metallnitride bzw. Metalloxynitride in Frage. Die Dicke der Schicht (ii) beträgt 10 - 550 nm, vorzugsweise 15 - 400 nm und insbesondere 20 - 350 nm.

Die Metallschichten (iii) bestehen aus Metallen, wie z.B. Aluminium, Chrom, Nickel, Chrom-Nickel-Legierungen oder Silber. Chrom und Aluminium sind dabei bevorzugt, da sie leicht abzuscheiden sind. Die Schichtdicke der Metallschichten wird auf 5 bis 20 nm eingestellt, um Semitransparenz zu erhalten. Als semitransparente Reflektorschichten können aber auch Materialien wie Graphit oder Titannitrid eingesetzt werden.

Die erfindungsgemäßen Pigmente enthalten in der Beschichtung zusätzliche Farbmittel. Werden beispielsweise Rußpartikel verwendet, dann werden Partikelgrößen von 5 bis 200 nm und insbesondere 10 bis 100 nm verwendet. Derartige Pigmente, die bevorzugt Rußpartikel in Schichten aus Titandioxid, Eisenoxid, Zinnoxid, Chromoxid und Zinkoxid enthalten sind in EP 0 499 864 beschrieben.

Weiterhin können die erfindungsgemäßen Pigmente auch Partikel aus Titandioxid, Aluminiumoxid, Siliciumdioxid, Zinndioxid, Magnesiumoxid, Zinkoxid, Cerdioxid, Wolframoxid, Molybdänoxid, Zirkonoxid, aber auch Mischoxide, wie Cr₂FeO₄, CoAl₂O₄ oder NiAl₂O₄, in der Beschichtung enthalten.

Anstelle anorganischer Pigmentpartikel können auch organische Pigmentpartikel in der Beschichtung enthalten sein, wobei insbesondere temperaturstabile organische Pigmente bevorzugt sind. Als organische Pigmentpartikel werden vorzugsweise Phthalocyanine, Verlackungsprodukte von basischen Farbstoffen mit Heteropolysäuren, Anthrachinone, Phenazine, Phenoxazine, Diketopyrrolopyrrole oder Perylene verwendet. Prinzipiell können alle Pigmente, die für die Einarbeitung in das Substrat beschrieben wurden auch in die Beschichtung des erfindungsgemäßen Pigmentes eingearbeitet werden. Die Einlagerung von kleinen Metalloxid- oder organischen Pigmentpartikeln mit einer durchschnittlichen Größe von 10 bis 40 nm in die Hohlräume der Metalloxidbeschichtung bewirkt eine deutliche Erhöhung des Deckvermögens und des Glanzes, verbunden mit einer hohen Homogenität der Beschichtung im Vergleich zu Pigmenten, die durch Mischfällung erhalten werden. Das Deckvermögen und bei gefärbten Pigmentpartikeln die beobachtungswinkelabhängige Absorptionsfarbe der erfindungsgemäßen Pigmente kann in einem weiten Bereich durch die Konzentration der eingelagerten Pigmentpartikel variiert werden. Der auf die Beschichtung bezogene Massenanteil der eingelagerten Pigmentpartikel liegt zwischen 0.5 und 30 % und insbesondere zwischen 2 und 20 %. Weitere Angaben zu Pigmenten, die in der Beschichtung Pigmentpartikel enthalten, sind DE 41 40 295 zu entnehmen.

Das fertige Pigment kann mit einer Nachbeschichtung oder Nachbehandlung versehen werden, die die Licht-, Wetter- und chemische Stabilität weiter erhöht, oder die Handhabung des Pigments, insbesondere die Einarbeitung in unterschiedliche Medien, erleichtert. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage.

Die zusätzlich aufgebrachten Stoffe machen nur etwa 0,1 bis 5 Gew.-%, vorzugsweise etwa 0,5 bis 3 Gew.-%, des gesamten Pigmentes aus.

Die Anzahl und Dicke der Schichten ist abhängig vom gewünschten Effekt und dem verwendeten Substrat. Die Anzahl der Schichten wird durch die Wirtschaftlichkeit des Pigmentes begrenzt. Verwendet man als Substrat TiO₂-Plättchen, die nach dem in WO 97/43346 beschriebenen Verfahren auf einem endlosen Band hergestellt werden, lassen sich besonders gut definierte Interferenzeffekte erzielen, da diese TiO₂-Plättchen eine einheitliche Schichtdicke besitzen. Das Reflexions- bzw. Transmissionsspektrum eines solchen Pigmentes weist feinere und genauer abstimmbare Strukturen auf als das Spektrum eines entsprechenden Pigmentes, das auf einem Substrat mit breiter Dickenverteilung, wie z.B. Glimmer, beruht.

Die TiO₂-Plättchen werden gemäß der WO 97/43346 auf einem endlosen Band durch Verfestigung und Hydrolyse einer Titantetrachloridlösung hergestellt.

Die Metalloxidschichten werden vorzugsweise naßchemisch aufgebracht, wobei die zur Herstellung von Perlglanzpigmenten entwickelten naßchemischen Beschichtungsverfahren angewendet werden können; derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, sowie DE 32 35 017.

Zur Beschichtung werden die Substratpartikel in Wasser suspendiert und mit einem oder mehreren hydrolysierbaren Metallsalzen bei einem für die Hydrolyse geeigneten pH-Wert versetzt, der so gewählt wird, daß die Metalloxide bzw. Metalloxidhydrate direkt auf den Partikeln niedergeschlagen werden, ohne daß es zu Nebenfällungen kommt. Der pH-Wert wird üblicherweise durch gleichzeitiges Zudosieren einer Base konstant gehalten. Anschließend werden die Pigmente abgetrennt, gewaschen und getrocknet und gegebenenfalls geglüht, wobei die Glühtemperatur im Hinblick auf die jeweils vorliegende Beschichtung optimiert werden kann. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Für das Aufbringen von Titandioxidschichten wird das im US 3 553 001 beschriebene Verfahren bevorzugt.

Zu einer auf etwa 50-100 °C, insbesondere 70-80 °C erhitzten Suspension des zu beschichtenden Materials wird langsam eine wäßrige Titansalzlösung zugegeben, und es wird durch gleichzeitiges Zudosieren einer Base, wie z.B. wäßrige Ammoniaklösung oder wäßrige Alkalilauge, ein weitgehend konstanter pH-Wert von etwa 0,5-5, insbesondere etwa 1,5-2,5 eingehalten. Sobald die gewünschte Schichtdicke der TiO₂-Fällung erreicht ist, wird die Zugabe der Titansalzlösung und der Base gestoppt.

Dieses, auch als Titrationsverfahren bezeichnete Verfahren zeichnet sich dadurch aus, daß ein Überschuß an Titansalz vermieden wird. Das wird dadurch erreicht, daß man pro Zeiteinheit nur eine solche Menge der Hydrolyse zuführt, wie sie für eine gleichmäßige Beschichtung mit dem hydratisierten TiO₂ erforderlich ist und wie pro Zeiteinheit von der verfügbaren Oberfläche aufgenommen werden kann. Es entstehen deshalb keine hydratisierten Titandioxidteilchen, die nicht auf der zu beschichtenden Oberfläche niedergeschlagen sind.

Für das Aufbringen der Siliziumdioxidschichten ist folgendes Verfahren anzuwenden: Zu einer auf etwa 50-100 °C, insbesondere 70-80 °C erhitzten Suspension des zu beschichtenden Materials wird eine Natronwasserglaslösung zudosiert. Durch gleichzeitige Zugabe von 10%iger Salzsäure wird der pH-Wert bei 4 bis 10, vorzugsweise bei 6,5 bis 8,5 konstant gehalten. Nach Zugabe der Wasserglaslösung wird noch 30 min nachgerührt.

Die einzelnen Schichten können auch nach bekannten Verfahren durch Sputtern von Metallen, beispielsweise von Aluminium oder Chrom oder von Legierungen, wie zum Beispiel Cr-Ni-Legierungen sowie von Metalloxiden, beispielsweise von Titanoxid, Siliciumoxid, oder Indium-Zinn-Oxid oder durch thermisches Verdampfen von Metallen, Metalloxiden oder Acrylaten hergestellt werden. Bevorzugt wird eine Vakuumbandbeschichtung, wie sie in DE 197 07 805 und in DE 197 07 806 für die Herstellung von Interferenzpigmenten beschrieben wird.

## Patentansprüche

1. Mehrschichtiges Perlglanzpigment auf Basis eines plättchenförmigen Substrates aus einem Material mit einer Brechzahl von größer als 1,8, das mindestens
(i) eine erste Schicht aus einem Material mit niedriger Brechzahl im Bereich von 1,35 bis 1,8,
(ii) eine zweite Schicht aus einem Material mit einer Brechzahl von größer als 1,8, sowie
(iii) eine semitransparente Metallschicht, die auf dem Substrat oder der Schicht (ii) aufgebracht ist,
aufweist.

2. Perlglanzpigment nach Anspruch 1, **dadurch gekennzeichnet, daß** es zusätzlich eine Nachbeschichtung aufweist.

3. Perlglanzpigment nach Anspruch 1, **dadurch gekennzeichnet, daß** das Substrat plättchenförmiges Titandioxid, Zirkoniumdioxid, α-Eisen(III)-oxid, Zinndioxid oder Zinkoxid ist.

4. Perlglanzpigment nach mindestens einem der Ansprüche 1 bis 3, **dadurch gekennzeichnet, daß** das Material mit niedriger Brechzahl SiO₂, Al₂O₃, AlO(OH), B₂O₃, MgF₂ oder ein Acrylat ist.

5. Perlglanzpigment nach mindestens einem der Ansprüche 1 bis 4, **dadurch gekennzeichnet, daß** das Material mit hoher Brechzahl TiO₂, ZrO₂, Fe₂O₃, SnO₂, ZnO oder ein Gemisch aus diesen Oxiden oder ein Eisentitanat, ein Eisenoxidhydrat, ein Titansuboxid oder eine Mischung bzw. Mischphase dieser Verbindungen ist.

6. Verfahren zur Herstellung eines mehrschichtigen Perlglanzpigmentes gemäß den Ansprüchen 1 - 5 durch
- Aufbringen eines Precursors des Substratmaterials als dünner Film auf ein endloses Band,
- Verfestigung des flüssigen Films durch Trocknung und dabei Entwicklung des Metalloxides durch chemische Reaktion aus dem Precursor,
- Ablösung des getrockneten Films,
- Waschen der erhaltenen Substratpartikel und Resuspendierung in einer Beschichtungslösung,
- Beschichtung der Substratpartikel mit mindestens einer ersten Schicht aus einem Material mit niedriger Brechzahl im Bereich von 1,35 bis 1,8, einer zweiten Schicht aus einem Material mit einer Brechzahl von größer als 1,8 sowie mindestens einer semitransparenten Metallschicht.

7. Verfahren nach Anspruch 6, **dadurch gekennzeichnet, daß** zusätzlich eine Nachbeschichtung aufgebracht wird.

8. Verfahren nach einem der Ansprüche 6 oder 7, **dadurch gekennzeichnet, daß** als Precursor Lösungen von anorganischen oder organischen Verbindungen der Metalle Titan, Zirkonium, Eisen, Zinn oder Zink eingesetzt werden.

9. Verfahren nach mindestens einem der Ansprüche 6 bis 8, **dadurch gekennzeichnet, daß** der Precursor Titantetrachlorid ist.

10. Verfahren nach mindestens einem der Ansprüche 6 - 9, **dadurch gekennzeichnet, daß** die Schichten nach Zwischentrocknung des zu beschichtenden Materials in einem Wirbelbettreaktor durch CVD und/oder PVD aufgebracht werden.

11. Verwendung der Pigmente nach den Ansprüchen 1 bis 5 zur Pigmentierung von Farben, Lacken, Druckfarben, Kunststoffen, keramischen Materialien. Gläsern und kosmetischen Formulierungen.

12. Verwendung der Pigmente nach den Ansprüchen 1 bis 5 für den Sicherheitsbereich, insbesondere für Wert- und Sicherheitsdruck, für Agrarfolien und für die Lasermarkierung von Kunststoffen.

13. Farben, Lacke, Druckfarben, Kunststoffe, Kosmetika, Keramiken, Gläser und Polymerfolien, welche mit einem Pigment nach den Ansprüchen 1 bis 5 pigmentiert sind.

14. Lasermarkierbare Kunststoffe enthaltend Pigmente nach den Ansprüchen 1 bis 5.

## Claims

1. Multilayer pearl lustre pigment on the basis of a platelet-shaped substrate comprising a material having a refractive index of more than 1.8, which comprises at least
(i) one first layer comprising a material of low refractive index in the range from 1.35 to 1.8,
(ii) a second layer comprising a material having a refractive index of more than 1.8,
(iii) a semitransparent metal layer which is applied to the substrate or to the layers (ii),

2. Pearl lustre pigment according to Claim 1, **characterized in that** it additionally comprises an aftercoating.

3. Pearl lustre pigment according to Claim 1, **characterized in that** the substrate is platelet-shaped titanium dioxide, zirconium dioxide, α-iron(III) oxide, tin dioxide or zinc oxide.

4. Pearl lustre pigment according to at least one of Claims 1 to 3, **characterized in that** the material of low refractive index is SiO₂, Al₂O₃, AlO (OH), B₂O₃, MgF₂ or an acrylate.

5. Pearl lustre pigment according to at least one of Claims 1 to 4, **characterized in that** the material of high refractive index is TiO₂, ZrO₂, Fe₂O₃, SnO₂, ZnO or a mixture of these oxides or an iron titanate, an iron oxide hydrate, a titanium suboxide or a mixture and/or mixed phase of these compounds.

6. Process for producing a multilayer pearl lustre pigment according to Claims 1 to 5 by
- applying a precursor of the substrate material as a thin film to a continuous belt,
- solidifying the liquid film by drying and hence developing the metal oxide by chemical reaction from the precursor,
- detaching the dried film,
- washing the resultant substrate particles and resuspending them in a coating solution,
- coating the substrate particles with at least one first layer of a material of low refractive index in the range from 1.35 to 1.8 and a second layer of a material having a refractive index of more than 1.8, and at least one semitransparent metal layer.

7. Process according to Claim 6, **characterized in that** an aftercoating is additionally applied.

8. Process according to one of Claims 6 or 7, **characterized in that** precursors employed are solutions of organic or inorganic compounds of the metals titanium, zirconium, iron, tin or zinc.

9. Process according to at least one of Claims 6 to 8, **characterized in that** the precursor is titanium tetrachloride.

10. Process according to at least one of Claims 6 to 9, **characterized in that** following drying of the material to be coated the layers are applied in a fluidized-bed reactor by CVD and/or PVD.

11. Use of the pigments according to Claims 1 to 5 for pigmenting colours, paints, printing inks, plastics, ceramic materials, glasses and cosmetic formulations.

12. Use of the pigments according to Claims 1 to 5 for the security sector, e.g. the printing of items of value and of security, for agricultural films and for the laser marking of plastics.

13. Colours, paints, printing inks, plastics, cosmetics, ceramics, glasses and polymer films pigmented with a pigment according to Claims 1 to 5.

14. Laser-markable plastics comprising pigments according to Claims 1 to 5.

## Revendications

1. Pigment nacré multicouches à base d'un substrat lamellaire constitué d'un matériau ayant un indice de réfraction de plus de 1,8, qui comprend au moins :
(i) une première couche en un matériau ayant un faible indice de réfraction dans la plage de 1,35 à 1,8,
(ii) une deuxième couche en un matériau ayant un indice de réfraction supérieur à 1,8,
(iii) une couche métallique semi-transparente, qui est déposée sur le substrat ou la couche (ii).

2. Pigment nacré selon la revendication 1, **caractérisé en ce qu'**il présente en plus un revêtement supplémentaire.

3. Pigment nacré selon la revendication 1, **caractérisé en ce que** le substrat est le dioxyde de titane, le dioxyde de zirconium, l'oxyde de fer(III) α, le dioxyde d'étain ou l'oxyde de zinc lamellaires.

4. Pigment nacré selon au moins l'une des revendications 1 à 3, **caractérisé en ce que** le matériau ayant un indice de réfraction faible est SiO₂, Al₂O₃, AlO (OH), B₂O₃, MgF₂ ou un acrylate.

5. Pigment nacré selon au moins l'une des revendications 1 à 4, **caractérisé en ce que** le matériau ayant un indice de réfraction élevé est TiO₂, ZrO₂, Fe₂O₃, SnO₂, ZnO ou un mélange de ces oxydes ou un titanate de fer, un oxyhydrate de fer, un sous-oxyde de titane ou un mélange ou une phase mélangée de ces composés.

6. Procédé de fabrication d'un pigment nacré multicouches selon les revendications 1 à 5 par les étapes consistant à :
- déposer un précurseur d'un matériau substrat sous forme de film mince sur une bande sans fin,
- solidifier le film liquide par séchage et puis développer l'oxyde métallique par réaction chimique à partir du précurseur,
- détacher le film séché,
- laver les particules de substrat obtenues et resuspendre dans une solution de revêtement,
- revêtir les particules de substrat d'au moins une première couche constituée d'un matériau ayant un faible indice de réfraction dans la plage de 1,35 à 1,8, d'une deuxième couche constituée d'un matériau ayant un indice de réfraction supérieur à 1,8 et d'au moins une couche métallique semi-transparente.

7. Procédé selon la revendication 6, **caractérisé en ce que**, en plus, un revêtement complémentaire est déposé.

8. Procédé selon l'une des revendications 6 ou 7, **caractérisé en ce que** l'on met en oeuvre à titre de précurseur des solutions de composés inorganiques ou organiques des métaux titane, zirconium, fer, étain ou zinc.

9. Procédé selon au moins l'une des revendications 6 à 8, **caractérisé en ce que** le précurseur est le tétrachlorure de titane.

10. Procédé selon au moins une des revendications 6 à 9, **caractérisé en ce que** les couches sont déposées par CVD et/ou PVD après séchage intermédiaire du matériau à revêtir dans un réacteur en lit fluidisé.

11. Utilisation des pigments selon les revendications 1 à 5, pour la pigmentation de couleurs, de peintures, de couleurs d'impression, de plastiques, de matériaux céramiques, de verres et de formulations cosmétiques.

12. Utilisation des pigments selon les revendications 1 à 5 pour le domaine de la sécurité, en particulier pour l'impression de valeurs et de sécurités, pour les films agraires et pour le marquage au laser des plastiques.

13. Couleurs, peintures, couleurs d'impression, plastiques, cosmétiques, céramiques, verres et films polymères, qui sont pigmentés avec un pigment selon les revendications 1 à 5.

14. Plastiques pouvant être marqués au laser contenant les pigments selon les revendications 1 à 5.
